# EUROPEAN PATENT APPLICATION

(11) **EP 4 694 180 A1**
(43) Date of publication of application: **11.02.2026**
(21) Application number: 24810838.3
(22) Date of filing: 25.04.2024
(51) Int. Cl.: H04Q 9/00, E02F 3/84, E02F 9/20, H04N 7/18

(54) **INFORMATION SYSTEM AND OPERATION DEVICE**

(30) Priority: 23.05.2023 JP 2023084448
(71) Applicant: KOBELCO CONSTRUCTION MACHINERY CO., LTD., Hiroshima-shi, Hiroshima 731-5161 (JP)
(72) Inventor: HIROSE, Ryuichi, Saeki-ku, Hiroshima-shi Hiroshima 731-5161 (JP)
(74) Representative: TBK
(86) International application number: PCT/JP2024/016261
(87) International publication number: WO 2024/241830

(57) **Abstract**

An information system executes designated communication control processing of suspending transmission of image data by a designated device or reducing a transmission speed of the image data in a case where there is designated communication other than transmission of the image data acquired by the designated device between the designated device and an external server, the designated device being at least one of an operation device and an operation target operated by the operation device.

## Description

### Technical Field

The present invention relates to an information system and an operation device.

### Background Art

According to a remote information system for remotely operating a work machine, a video signal captured by a camera provided in the work machine is transmitted via a network and displayed on a monitor device of a remote operation device (control room) installed at a remote place (see, for example, Patent Literature 1).

### Citation List

### Patent Literature

Patent Literature 1: JP 2013-168777 A

There is a demand for a system capable of storing image data displayed on a monitor device of a remote operation device as operation history information of a work machine and referring to the stored image data. It is assumed that image data is stored in an external server of a remote operation device accessible online.

However, when image data is uploaded to the server, a line is congested, and thus, when a line is used for a purpose other than upload of image data, communication quality in the use is degraded, in such a manner as communication delay or response degradation.

### Summary of Invention

An object of the present invention is to provide an information system and an operation device that suppress degradation of communication quality.

An information system according to the present invention executes designated communication control processing of suspending transmission of image data by a designated device or reducing a transmission speed of the image data in a case where there is designated communication other than transmission of the image data acquired by the designated device between the designated device and an external server, the designated device being at least one of an operation device and an operation target operated by the operation device.

To "acquire" image data is a concept including acquiring the image data using an imaging device and receiving the image data using a communication device. Communication between a second designated device and an external server for image data primarily acquired by a first designated device and secondarily acquired (or received) by the second designated device from the first designated device may be controlled, and communication between the first designated device and the external server for information primarily acquired by the first designated device may be controlled.

An operation device according to the present invention includes: a display device that displays image data received from an operation target; and a communication device that transmits the image data to an external server, in which designated communication control processing for suspending transmission of the image data or reducing a transmission speed of the image data is executed in a case where there is designated communication other than transmission of the image data with the external server.

### Brief Description of Drawings

FIG. 1 is an explanatory diagram regarding a configuration of an information system.
FIG. 2 is an explanatory diagram regarding a configuration of a remote operation device.
FIG. 3 is an explanatory diagram regarding a configuration of a work machine.
FIG. 4 is an explanatory diagram regarding a function of the information system.
FIG. 5 is an explanatory diagram regarding a working environment image.

### Description of Embodiments

### (Configuration of Information System)

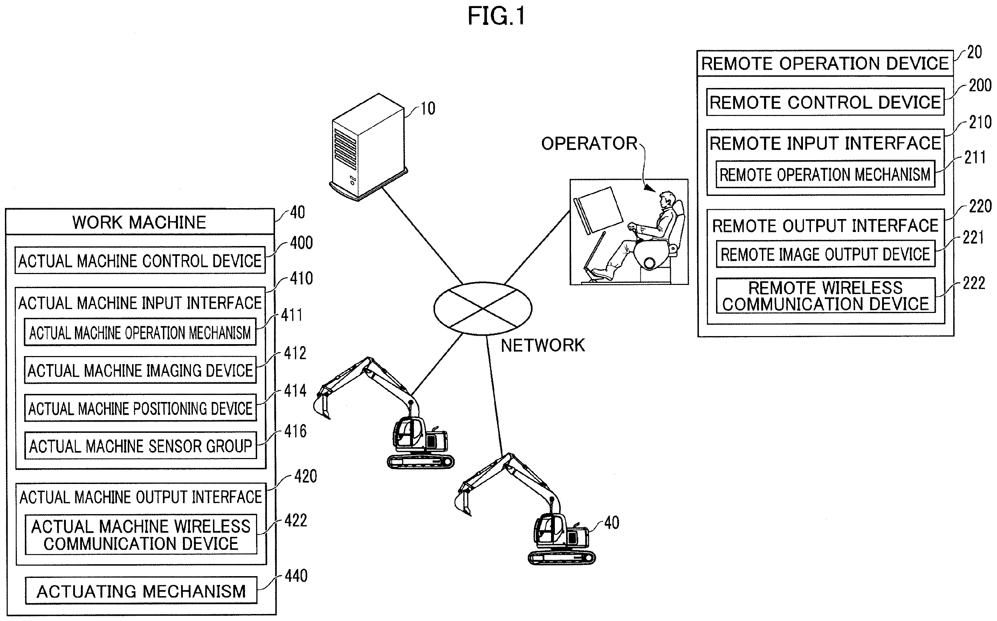

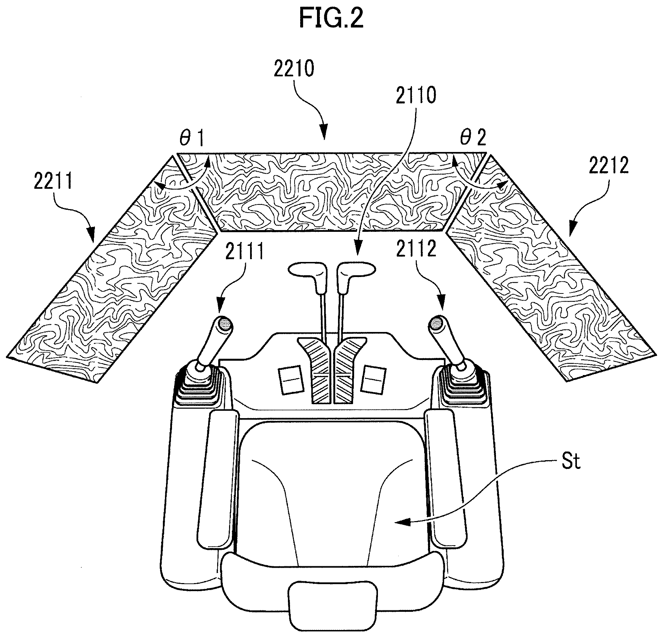

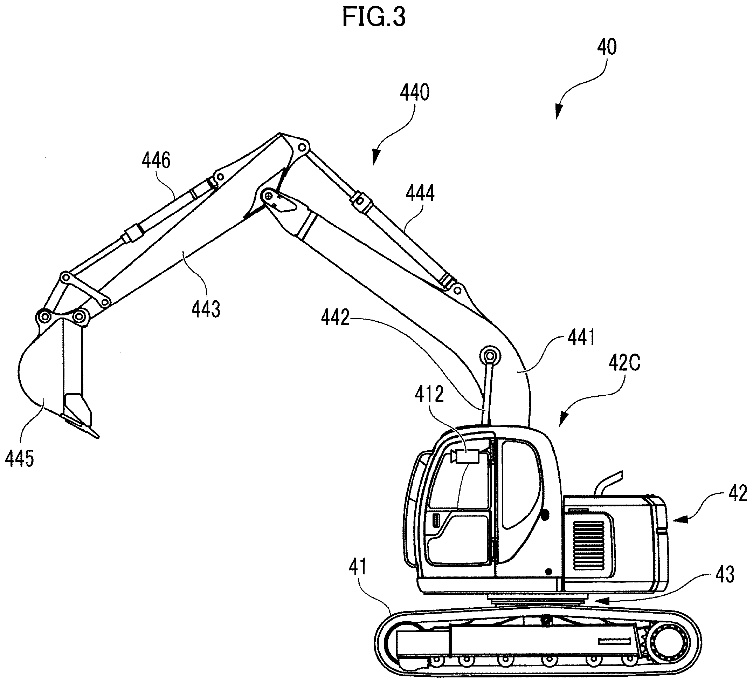

FIG. 1 is an explanatory diagram regarding a configuration of an information system. FIG. 2 is an explanatory diagram regarding a configuration of a remote operation device. FIG. 3 is an explanatory diagram regarding a configuration of a work machine. An information system according to an embodiment of the present invention illustrated in FIG. 1 includes a remote operation device 20 (operation device) configured to be able to perform network communication with each of an external server 10 and a work machine 40 (operation target). Note that the information system may be configured to include at least one of the external server 10 and the work machine 40 (operation target).

### (Configuration of Remote Operation Device)

As illustrated in FIG. 1, the remote operation device 20 includes a remote control device 200 (processing device), a remote input interface 210, and a remote output interface 220. The remote control device 200 includes an arithmetic processing device (a single-core processor or a multi-core processor or a processor core constituting this), reads necessary data and software from a storage device such as a memory, and executes arithmetic processing according to the software on the data.

The remote input interface 210 includes a remote operation mechanism 211. The remote output interface 220 includes a remote image output device 221 (display device) and a remote wireless communication device 222.

The remote operation mechanism 211 includes a travelling operation device, a slewing operation device, a boom operation device, an arm operation device, and a bucket operation device. Each operation device includes an operating lever that receives a turning operation. An operation lever (travel lever) of a travelling operation device is operated to move a lower travelling body 41 of the work machine 40. The travel lever may also serve as a travel pedal. For example, a travel pedal fixed to a base portion or a lower end portion of the travel lever may be provided. An operation lever (slewing lever) of a slewing operation device is operated to move a hydraulic slewing motor constituting a slewing mechanism 43 of the work machine 40. An operation lever (boom lever) of a boom operation device is operated to move a boom cylinder 442 of the work machine 40. An operation lever (arm lever) of an arm operation device is operated to move an arm cylinder 444 of the work machine 40. An operation lever (bucket lever) of a bucket operation device is operated to move a bucket cylinder 446 of the work machine 40.

For example, as illustrated in FIG. 2, operation levers constituting the remote operation mechanism 211 are arranged around a seat St on which an operator sits. The seat St is in a form of a high back chair with an armrest, but may be a seating portion in any form that allows an operator to sit, such as a form of a low back chair without a headrest or a form of a chair without a backrest.

Left and right travel levers 2110 corresponding to left and right crawlers are arranged side by side in front of the seat St. One operation lever may also serve as a plurality of operation levers. For example, a left operation lever 2111 provided in front of a left frame of the seat St illustrated in FIG. 2 may function as an arm lever in a case of being operated in a front-rear direction, and may function as a slewing lever in a case of being operated in a left-right direction. Similarly, a right operation lever 2112 provided in front of a right frame of the seat St illustrated in FIG. 2 may function as a boom lever in a case of being operated in the front-rear direction, and may function as a bucket lever in a case of being operated in the left-right direction. A lever pattern may be arbitrarily changed by an operation instruction of an operator.

The remote image output device 221 includes a single or a plurality of image output devices. The remote image output device 221 includes a capture board (output processing device) that outputs input video information to a screen of an image output device, and a hub (relay device) that inputs video information to the capture board according to a determination result of transmitted video information.

As illustrated in FIG. 2, for example, the remote image output device 221 includes a central remote image output device 2210, a left remote image output device 2211, and a right remote image output device 2212 having a substantially rectangular screen arranged in each of a forward direction, a diagonally front-left direction, and a diagonally front-right direction of the seat St. Shapes and sizes of screens (image display regions) of the central remote image output device 2210, the left remote image output device 2211 and the right remote image output device 2212 may be the same or different. The remote image output device 221 may be configured by a single curved or bendable image output device, two or four or more image output devices arranged to surround the front of the sheet St.

As illustrated in FIG. 2, a right edge of the left remote image output device 2211 is adjacent to a left edge of the central remote image output device 2210 such that a screen of the central remote image output device 2210 and a screen of the left remote image output device 2211 form an inclination angle θ1 (for example, 120° ≤ θ1 ≤ 150°). As illustrated in FIG. 2, a left edge of the right remote image output device 2212 is adjacent to a right edge of the central remote image output device 2210 such that a screen of the central remote image output device 2210 and a screen of the right remote image output device 2212 form an inclination angle 02 (for example, 120° ≤ θ2 ≤ 150°). The inclination angles θ1 and θ2 may be the same or different.

A screen of each of the central remote image output device 2210, the left remote image output device 2211 and the right remote image output device 2212 may be parallel to a vertical direction or may be inclined with respect to the vertical direction. An image output device of at least one of the central remote image output device 2210, the left remote image output device 2211, and the right remote image output device 2212 may include a plurality of divided image output devices. For example, the central remote image output device 2210 may include vertically adjacent image output devices having a substantially rectangular screen.

### (Configuration of Work Machine)

As illustrated in FIG. 1, the work machine 40 includes an actual machine control device 400, an actual machine input interface 410, an actual machine output interface 420, and an actual machine wireless communication device 422. Each constituent element of the actual machine control device 400 includes an arithmetic processing device (a single-core processor or a multi-core processor or a processor core constituting this), reads necessary data and software from a storage device such as a memory, and executes arithmetic processing according to the software on the data.

The work machine 40 is, for example, a crawler excavator (construction machine), and as illustrated in FIG. 3, includes the lower travelling body 41 of a crawler type and an upper slewing body 42 slewably mounted on the lower travelling body 41 via a slewing mechanism 43. A cab 42C (operator's cab) is provided in a front left side portion of the upper slewing body 42. A work mechanism 44 is provided in a front central portion of the upper slewing body 42.

The actual machine input interface 410 includes an actual machine operation mechanism 411, an actual machine imaging device 412, an actual machine positioning device 414, and an actual machine sensor group 416. The actual machine operation mechanism 411 includes a plurality of operation levers arranged around a seat arranged inside the cab 42C in a similar manner as the remote operation mechanism 211. A drive mechanism or a robot that receives a signal corresponding to an operation mode of a remote operation lever and moves an actual machine operation lever based on the received signal is provided in the cab 42C. The actual machine imaging device 412 is installed inside the cab 42C, for example, and images an environment including at least a part of the work mechanism 44 through a front window and left and right side windows. Some or all of the front window and the side windows may be omitted. The actual machine positioning device 414 includes a GPS or a GNSS, and a gyro sensor or the like as necessary, and measures a position (latitude and longitude) of the work machine 40.

The actual machine sensor group 416 is configured to output, to the actual machine control device 400, a signal corresponding to a value of a parameter regarding a state of the work machine 40, such as a raising and lowering angle of a boom 441 with respect to the upper slewing body 42, a rotation angle of an arm 443 with respect to the boom 441, a rotation angle of a bucket 445 with respect to the arm 443, hydraulic pressure, and a remaining fuel amount.

As illustrated in FIG. 3, the work mechanism 44 includes the boom 441 mounted on the upper slewing body 42 so as to be raised and lowered, the arm 443 rotatably connected to a tip of the boom 441, and the bucket 445 (tip attachment) rotatably connected to a tip of the arm 443. The work mechanism 44 is mounted with the boom cylinder 442, the arm cylinder 444, and the bucket cylinder 446 that include a telescopic hydraulic cylinder.

The boom cylinder 442 is interposed between the boom 441 and the upper slewing body 42 so as to expand and contract by receiving supply of hydraulic oil to rotate the boom 441 in a raising and lowering direction. The arm cylinder 444 is interposed between the arm 443 and the boom 441 so as to expand and contract by receiving the supply of hydraulic oil to rotate the arm 443 about a horizontal axis with respect to the boom 441. The bucket cylinder 446 is interposed between the bucket 445 and the arm 443 so as to expand and contract by receiving supply of hydraulic oil to rotate the bucket 445 about a horizontal axis with respect to the arm 443.

### (Function)

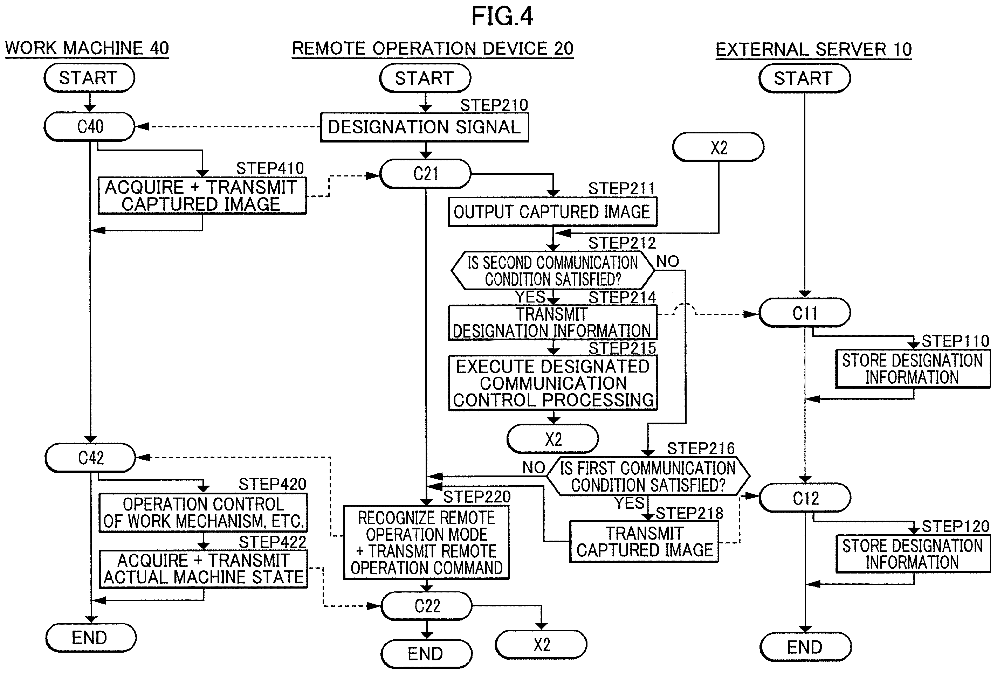

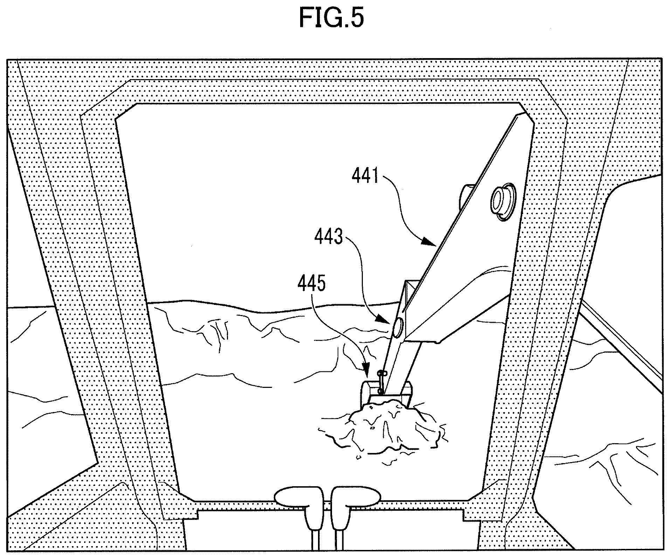

FIG. 4 is an explanatory diagram regarding a function of the information system. FIG. 5 is an explanatory diagram regarding a working environment image. Functions of a construction support device and an imaging function control system having the above configuration will be described with reference to a flowchart illustrated in FIG. 4. In the flowchart, a block "C(number)" is used for simplification of description, and means transmission and/or receiving of data, and means conditional branching in which processing in a branch direction is executed on condition of transmission and/or receiving of the data.

In the remote operation device 20, the remote control device 200 transmits a designation signal to the work machine 40 through the remote wireless communication device 222 (STEP210 in FIG. 4). When a plurality of the work machines 40 are a plurality of operation target candidates, a designation signal may be transmitted to each of a plurality of the work machines 40. Presence or absence of a designation operation by an operator through the remote input interface 210 may be determined, and a designation signal may be transmitted in a case where the determination result is positive. The "designation operation" is, for example, an operation such as a tap on the remote input interface 210 for designating the work machine 40 intended to be remotely operated by an operator.

In the work machine 40, in a case where a designation signal is received through the actual machine wireless communication device 422 (C40 in FIG. 4), the actual machine control device 400 transmits a captured image (camera image to which appropriate image processing may be applied) acquired through the actual machine imaging device 412 to the remote operation device 20 as "first actual machine information" (STEP410 in FIG. 4). The captured image (or captured image data) may be image data representing a simulated environmental image generated based on the captured image in addition to the captured image itself.

In the remote operation device 20, when the first actual machine information is received through the remote wireless communication device 222 (C21 in FIG. 4), a captured image as the first actual machine information is output to the remote image output device 221 (display device) by the remote control device 200 (STEP211 in FIG. 4). By this, for example, as illustrated in FIG. 5, a captured image in which, in addition to the ground spreading in front of the cab 42C, the boom 441, the arm 443, which are a part of the work mechanism 44, and a pile of debris or earth and sand (which is a work target by the bucket 445) in a construction target region are shown is output to the remote image output device 221.

The remote control device 200 determines whether or not a second communication condition is satisfied (STEP212 in FIG. 4). The "second communication condition" includes, for example, that designation information required to be transmitted to the external server 10 is stored in a storage device (designated region of a memory) of the remote operation device 20, that an information amount of the designation information is equal to or more than a second designation value, that a response of a designation mode is received from the external server 10, and/or that an operator of the remote operation device 20 performs an operation of the second designation mode through the remote input interface 210. The "designation information" may include, in addition to "second actual machine information" to be described later, information indicating that there is an operation through the remote input interface 210 for at least one of "remote operation start", "remote operation interruption", and "remote operation end" of the work machine 40.

In a case where it is determined that the second communication condition is satisfied (YES in STEP212 in FIG. 4), the designation information is transmitted or uploaded to the external server 10 by the remote control device 200 serving as a "designated device" through the remote wireless communication device 222 (STEP214 in FIG. 4). At this time, an actual machine identifier for identifying the work machine 40 and a remote identifier for identifying the remote operation device 20 may be transmitted or uploaded to the external server 10 in association with a captured image. The external server 10 to which the "designation information" is sent and the external server 10 to which the "captured image" is sent may be the same or different. Each of the "designation information" and the "captured image" may be transmitted not only from one of the remote operation devices 20 but also from each of a plurality of the remote operation devices 20 to the external server 10.

In a case where the designation information is received by the external server 10 (C11 in FIG. 4), the designation information is stored or held in an information storage resource or a database in a cloud (STEP110 in FIG. 4).

Furthermore, the remote control device 200 executes "designated communication control processing" (STEP215 in FIG. 4). Specifically, upload of a captured image to the external server 10 by the remote control device 200 serving as the "designated device" is suspended, or as a transmission target to the external server 10, the priority of the captured image is relatively lowered as compared with the designation information, and for example, occupancy of communication bandwidth of the captured image is lowered. While the remote control device 200 determines that the second communication condition is satisfied, an untransmitted captured image is accumulated or cumulatively stored in a storage device of the remote control device 200. When the designated communication ends during execution of the designated communication control processing, transmission of captured image data is resumed, or a communication speed is returned to an original speed.

In a case where it is determined that the second communication condition is not satisfied (NO in STEP212 in FIG. 4), the remote control device 200 determines whether or not the first communication condition is satisfied (STEP216 in FIG. 4). The "first communication condition" includes, for example, in a storage device (designated region of a memory) of the remote operation device 20, that a designated period elapses from an upload start time or end time of a previous captured image to the external server 10, and/or that upload of designation information to the external server 10 is completed during execution of designated communication processing control. The "first communication condition" may include that a captured image required to be transmitted to the external server 10 is stored or accumulated, an information amount of the captured image is equal to or more than the first designation value, and/or that an operator of the remote operation device 20 performs an operation of a first designation mode through the remote input interface 210.

In a case where it is determined that the first communication condition is satisfied (YES in STEP216 in FIG. 4), the designation information is transmitted or uploaded to the external server 10 by the remote control device 200 serving as a "designated device" through the remote wireless communication device 222 (STEP218 in FIG. 4). At this time, an actual machine identifier for identifying the work machine 40 and a remote identifier for identifying the remote operation device 20 may be transmitted or uploaded to the external server 10 in association with a captured image. In a case where a captured image (first actual machine information) is received by the external server 10 (C12 in FIG. 4), the captured image is stored or held in an information storage resource or a database in a cloud (STEP120 in FIG. 4).

In the remote operation device 20, an operation mode of the remote operation mechanism 211 is recognized by the remote control device 200, and a remote operation command corresponding to the operation mode is transmitted to the work machine 40 through the remote wireless communication device 222 (STEP220 in FIG. 4).

In the work machine 40, in a case where the remote operation command is received by the actual machine control device 400 through the actual machine wireless communication device 422 (C42 in FIG. 4), an operation of the work mechanism 44 and the like is controlled according to the remote operation command (STEP420 in FIG. 4). For example, work of excavating and scooping up soil in a construction target region in front of the work machine 40 by the bucket 445, slewing the upper slewing body 42, and then dropping the soil from the bucket 445 to the outside of the construction target region is executed.

Furthermore, the actual machine control device 400 acquires a state (which may include the second actual machine information) of the work machine 40 based on an output signal of the actual machine sensor group 416, and transmits the acquired state to the remote operation device 20 (STEP422 in FIG. 4). The "second actual machine information" may include a value of at least one parameter regarding a state of the work machine 40 among a current position of the work machine 40, an inclination angle of the upper slewing body 42, a raising and lowering angle of the boom 441 with respect to the upper slewing body 42, a rotation angle of the arm 443 with respect to the boom 441, a rotation angle of the bucket 445 with respect to the arm 443, hydraulic pressure, a remaining fuel amount of fuel, and the like. The "second actual machine information" may include an operation mode of the remote operation mechanism 211 (an operation amount or an inclination angle of an operation lever constituting the remote operation mechanism 211), a remote operation command according to an operation mode, and/or an operation mode of an operation lever or the like constituting the actual machine operation mechanism 411 controlled in accordance with a remote operation command.

In the remote operation device 20, in a case where the second actual machine information is received through the remote wireless communication device 222 (C22 in FIG. 4), the second actual machine information is at least temporarily stored or held in a storage device (or a designated region of a memory) by the remote control device 200. Furthermore, processing in and after processing of determining sufficiency of the second communication condition is repeated by the remote control device 200 (see STEP212 to STEP218 in FIG. 4).

### (Operation and Effect)

According to the information system exhibiting the above function, in a case where there is designated communication (communication other than transmission of captured image data from the remote operation device 20 to the external server 10) between the remote operation device 20 and the external server 10, transmission of the captured image is suspended or the transmission speed is reduced (see YES in STEP212 → STEP214 → STEP215 in FIG. 4). By this, a situation in which communication capacity is excessively limited due to simultaneous execution of transmission of captured image data and designated communication may be avoided, and eventually, degradation of communication quality of the transmission of captured image data and the designated communication may be suppressed.

In a case where the designated communication is ended during execution of the designated communication control processing, transmission of image data that has been held until then is resumed, or a transmission speed that has been lowered until then is returned to an original speed (see STEP218 in FIG. 4). By this, in addition to suppression of degradation of communication quality of designated communication, smooth transmission of captured image data from the remote operation device 20 to the external server 10 can be achieved, and eventually degradation of communication quality of the transmission can be suppressed.

In a case where designated communication ends, captured image data accumulated in a storage device of the remote operation device 20 until then is transmitted to the external server 10 (see STEP218 in FIG. 4). By this, in addition to suppression of degradation of communication quality of designated communication, smooth transmission of captured image data from the remote operation device 20 to the external server 10 can be achieved, and eventually degradation of communication quality of the transmission can be suppressed.

### (Another Embodiment of Present Invention)

In the above embodiment, the information system includes the remote operation device 20, but may include the work machine 40 as another embodiment, or may include a computer (such as the external server 10) separate from the remote operation device 20 and the work machine 40. The work machine 40 (operation target) may be actually operated by an operator in the work machine 40 through the actual machine operation mechanism 411.

In the above embodiment, the "operation target" is the work machine 40 (or a construction machine), but, as another embodiment, the "operation target" may be any device such as an unmanned airplane, a vehicle, or another type of construction machine such as a crane, which can be remotely operated and has an acquisition function and a transmission function of internal information and/or external information.

In the above embodiment, actual machine information is uploaded from the remote operation device 20 serving as the "designated device" to the external server 10, but, as another embodiment, actual machine information may be directly uploaded from the work machine 40 serving as the "designated device" to the external server 10 (see STEP410 to C11 and STEP422 to C12 in FIG. 4). In this case, the information system includes the actual machine control device 400 of the work machine 40, and the actual machine control device 400 may execute the determination processing of sufficiency of the second communication condition (see STEP212 in FIG. 4), the transmission processing of designation information to the external server 10 (see STEP214 in FIG. 4), the designated communication control processing (see STEP215 in FIG. 4), the determination processing of sufficiency of the first communication condition (see STEP216 in FIG. 4), and the transmission processing of a captured image to the external server 10 (see STEP218 in FIG. 4).

The work machine 40 may have an autonomous operation function, and the remote operation device 20 may be configured to transmit commands to start, temporarily stop, and end autonomous operation of the work machine 40, and the work machine 40 may be configured to start, temporarily stop, and end autonomous operation in response to the commands.

An information system according to a first aspect of the present invention executes designated communication control processing of suspending transmission of image data by a designated device or reducing a transmission speed of the image data in a case where there is designated communication other than transmission of the image data acquired by the designated device between the designated device and an external server, the designated device being at least one of an operation device and an operation target operated by the operation device.

According to the information system having the configuration, in a case where there is designated communication (communication other than transmission of image data from a designated device to an external server) between an external server and a designated device that is at least one of an operation device and an operation target operated by the operation device, transmission of the image data is suspended or the transmission speed is reduced. By this, a situation in which information communication capacity between a designated device and an external server is excessively limited due to simultaneous execution of transmission of image data and designated communication may be avoided, and eventually, degradation of communication quality of the transmission of image data and the designated communication may be suppressed.

To "acquire" image data is a concept including acquiring the image data using an imaging device and receiving the image data using a communication device. Communication between a second designated device and an external server for image data primarily acquired by a first designated device and secondarily acquired (or received) by the second designated device from the first designated device may be controlled, and communication between the first designated device and the external server for information primarily acquired by the first designated device may be controlled.

An information system according to a second aspect of the present invention is the information system according to the first aspect, in which the operation target is preferably a work machine, and the operation device is preferably a remote operation device for remotely operating the work machine.

According to the information system having the above configuration, in a case where there is designated communication (communication other than transmission of image data acquired by the work machine from an operation device to an external server) between the remote operation device for remotely operating the work machine and the external server, transmission of the image data is suspended or the transmission speed is reduced. By this, a situation in which communication capacity of both transmission of image data and designated communication is excessively limited due to simultaneous execution of transmission of image data and designated communication may be avoided, and eventually, degradation of communication quality of the transmission of the image data and the designated communication may be suppressed.

An information system according to a third aspect of the present invention is the information system according to the first or second aspect, in which the designated device preferably acquires a camera image acquired by an imaging device included in the operation target as the image data.

According to the information system having the configuration, in a case where there is designated communication (communication other than transmission of image data acquired by an operation target through an imaging device from a designated device to an external server) between the designated device and the external server, transmission of the image data is suspended or the transmission speed is reduced. By this, a situation in which communication capacity for designated communication is excessively limited by transmission of image data can be avoided, and eventually, degradation of communication quality of the designated communication may be suppressed.

An information system according to a fourth aspect of the present invention is the information system according to the first to third aspects, in which the designated communication is preferably communication for managing at least one of operation start, operation interruption, and operation end of the operation target by the operation device.

According to the information system having the configuration, in a case where there is designated communication (communication other than transmission of image data acquired by an imaging device as a work target from an operation device to an external server) between the operation device and the external server, transmission of the image data is suspended or the transmission speed is reduced. By this, a situation in which communication capacity for designated communication is excessively limited by transmission of image data can be avoided, and eventually, degradation of communication quality of the designated communication (communication for managing at least one of operation start, operation interruption, and operation end of an operation target by an operation device) may be suppressed.

An information system according to a fifth aspect of the present invention is the information system according to first to fourth aspects, in which transmission of the image data by the designated device is preferably resumed or a communication speed is preferably returned to an original speed when the designated communication ends during execution of the designated communication control processing.

According to the information system having the above configuration, in a case where designated communication ends during execution of designated communication control processing, transmission of image data from a designated device to an external server, which has been suspended until then, is resumed, or a transmission speed, which has been reduced until then, is returned to an original speed. By this, in addition to suppression of degradation of communication quality of designated communication, smooth transmission of image data from a designated device to an external server can be achieved, and eventually, degradation of communication quality of the transmission can be suppressed.

An information system according to a sixth aspect of the present invention is the information system according to first to fifth aspects, in which the designated device is preferably caused to accumulate the image data during execution of the designated communication control processing, and to transmit the accumulated image data when the designated communication ends.

According to the information system having the configuration, in a case where designated communication ends, image data accumulated in a designated device until then is transmitted from the designated device to an external server. By this, in addition to suppression of degradation of communication quality of designated communication, smooth transmission of image data from a designated device to an external server can be achieved, and eventually, degradation of communication quality of the transmission can be suppressed.

An operation device according to a seventh aspect of the present invention includes: a display device that displays image data received from an operation target; and a communication device that transmits the image data to an external server, in which designated communication control processing for suspending transmission of the image data or reducing a transmission speed of the image data is executed in a case where there is designated communication other than transmission of the image data with the external server.

According to the operation device having the configuration, in a case where there is designated communication (communication other than transmission of image data from an operation device to an external server) between the operation device and the external server, transmission of the image data is suspended or the transmission speed is reduced. By this, a situation in which communication capacity for designated communication is excessively limited by transmission of image data can be avoided, and eventually, degradation of communication quality of the designated communication may be suppressed.

## Claims

1. An information system that executes designated communication control processing of suspending transmission of image data by a designated device or reducing a transmission speed of the image data in a case where there is designated communication other than transmission of the image data acquired by the designated device between the designated device and an external server, the designated device being at least one of an operation device and an operation target operated by the operation device.

2. The information system according to claim 1, wherein
the operation target is a work machine, and
the operation device is a remote operation device for remotely operating the work machine.

3. The information system according to claim 1, wherein the designated device acquires a camera image acquired by an imaging device included in the operation target as the image data.

4. The information system according to claim 1, wherein the designated communication is communication for managing at least one of operation start, operation interruption, and operation end of the operation target by the operation device.

5. The information system according to claim 1, wherein transmission of the image data by the designated device is resumed or a communication speed is returned to an original speed when the designated communication ends during execution of the designated communication control processing.

6. The information system according to claim 1, wherein the designated device is caused to accumulate the image data during execution of the designated communication control processing, and to transmit the accumulated image data when the designated communication ends.

7. An operation device comprising:
a display device that displays image data received from an operation target; and
a communication device that transmits the image data to an external server,
wherein designated communication control processing for suspending transmission of the image data or reducing a transmission speed of the image data is executed in a case where there is designated communication other than transmission of the image data with the external server.
